Europäisches Patentamt

European Patent Office

Office européen des brevets

(19)

(11) Numéro de publication : **0 500 404 A1**

(12) # DEMANDE DE BREVET EUROPEEN

(21) Numéro de dépôt : **92400196.9**

(22) Date de dépôt : **24.01.92**

(51) Int. Cl.$^5$ : **G21F 9/30,** G21C 19/36

(30) Priorité : **19.02.91 FR 9101957**

(43) Date de publication de la demande :
**26.08.92 Bulletin 92/35**

(84) Etats contractants désignés :
**BE CH DE ES LI SE**

(71) Demandeur : **FRAMATOME**
**Tour Fiat 1, Place de la Coupole**
**F-92400 Courbevoie (FR)**

(72) Inventeur : **Guigon, Jean-Pierre**
**Hameau de Varanges, 3 rue des Oiseaux**
**F-71640 Givry (FR)**
Inventeur : **Jacquier, Paul**
**37 rue du Chemin des Bruyères**
**F-69160 Tassin la Demi-Lune (FR)**

(74) Mandataire : **Bouget, Lucien et al**
**Cabinet Lavoix 2, Place d'Estienne d'Orves**
**F-75441 Paris Cédex 09 (FR)**

(54) **Procédé et dispositif de démentèlement des équipements internes d'un réacteur nucléaire refroidi par de l'eau.**

(57)     On réalise sous eau, à l'intérieur de la cuve (4) du réacteur, le démontage et/ou le découpage de chacun des composants (6) des équipements internes fixés dans la cuve (4). On obtient des éléments métalliques (12) séparés de la cuve (4) qui sont extraits successivement de la cuve puis compactés sous eau dans une presse de compactage. Les éléments métalliques (36) obtenus après compactage sont déposés sous eau dans un conteneur de stockage et de transport (37). Le dispositif de démantèlement comporte en particulier un ensemble de manutention et de coupe (11) qui permet de réaliser le découpage de tronçons cylindriques de l'enveloppe de coeur (6) du réacteur et le transport des tronçons (12) dans la presse de compactage (34).

FIG1

L'invention concerne un procédé et un dispositif de démantèlement des équipements internes d'un réacteur nucléaire refroidi par de l'eau.

Les réacteurs nucléaires refroidis à l'eau comportent une cuve qui est destinée à contenir le coeur du réacteur et qui est raccordée au circuit de refroidissement du réacteur dans lequel circule l'eau de refroidissement.

Les équipements internes constitués de différents composants fixés dans la cuve permettent en particulier d'assurer le support et le maintien des assemblages du coeur et la canalisation de l'eau de refroidissement à l'intérieur de la cuve.

Ces équipements internes comportent en particulier une enveloppe de coeur qui est constituée par une virole fixée dans une disposition coaxiale par rapport à la cuve qui se présente sous la forme d'un corps de forme générale cylindrique fermé par des fonds bombés et qui est placé avec son axe dans la direction verticale.

Les équipements internes du réacteur qui sont en contact avec le fluide de refroidissement et exposés aux rayonnements émis par le coeur du réacteur sont fortement activés et contaminés après un certain temps de fonctionnement du réacteur.

Dans le cas des centrales parvenues en fin de vie et qui nécessitent un arrêt complet, jusqu'ici, la solution retenue a été de laisser ces centrales dans l'état où elles se trouvaient et de laisser décroître l'activité des matériaux constitutifs de leurs composants, afin de les démonter ultérieurement, dans des conditions plus satisfaisantes qu'au moment de l'arrêt, sans avoir à utiliser des outillages complexes commandés à distance.

Dans l'avenir, le nombre de centrales qui seront mises hors exploitation industrielle augmentera sensiblement, si bien qu'il est nécessaire d'envisager un démantèlement de ces centrales, afin de restaurer dans son état d'origine le site où elles sont implantées.

Le démantèlement de la partie classique de la centrale ne pose pas de problème particulier mais, en revanche, le démantèlement de la partie de la centrale constituant le réacteur nucléaire proprement dit et en particulier les équipements internes de la cuve pose des problèmes difficiles à résoudre du fait des émissions radio-actives des matériaux constitutifs des composants du réacteur.

La cuve du réacteur est disposée à l'intérieur d'un puits de cuve ménagé dans une structure en béton qui délimite également une ou plusieurs piscines situées au-dessus du niveau supérieur de la cuve.

Après l'arrêt définitif et le refroidissement du réacteur, la piscine est remplie d'eau et le couvercle de la cuve est enlevé.

On réalise alors sous eau le déchargement des assemblages du coeur et l'évacuation de ces assemblages, par exemple vers des usines de retraitement.

Il est alors nécessaire d'effectuer le démontage et l'évacuation des équipements internes de la cuve, ces opérations devant être effectuées sous une hauteur d'eau importante du fait que les équipements internes sont fortement irradiés.

Le démantèlement des équipements internes doit donc être effectué par des opérations commandées à distance, depuis le bord supérieur des piscines du réacteur, après avoir rempli ces piscines jusqu'à leur niveau maximal.

Les différents composants des équipements internes sont démontés et/ou découpés sous eau à l'intérieur de la cuve, de manière à obtenir des éléments séparés de la cuve dont l'évacuation est réalisée à l'intérieur de fûts ou conteneurs.

Il est possible d'obtenir, par découpage mécanique, thermique ou électrochimiques des composants des équipements internes à l'intérieur de la cuve, des fragments dont les dimensions sont suffisamment faibles pour qu'on puisse réaliser leur introduction et leur stockage dans les fûts ou conteneurs sans opération ultérieure de réduction de volume. Cependant, de telles techniques de découpage entraînent la formation d'un volume de déchets radio-actifs qui est d'autant plus important que les longueurs de coupe sont elles-mêmes plus importantes. La mise aux dimensions des fûts ou conteneurs des éléments séparés des équipements internes par découpage est donc susceptible de produire un grand volume de déchets à très haute activité dont la récupération et le traitement peuvent s'avérer très difficiles.

Il est donc préférable d'utiliser des techniques de mise à la dimension des fragments de composants des équipements internes prélevés dans la cuve qui puissent être mises en oeuvre sans enlèvement de matière.

Parmi ces techniques, la fissuration à chaud ou à froid des composants ou éléments des équipements internes peut être envisagée mais cette technique paraît être d'application limitée en ce qui concerne les épaisseurs des pièces ou parois dont on veut effectuer le fractionnement par fissuration et l'adaptation du procédé à la configuration des pièces fragmentées. Il est en effet nécessaire d'effectuer une mise au point des paramètres de l'opération de fissuration, en fonction des configurations de chacun des composants des équipements internes.

On ne connaissait donc pas de procédé permettant de réaliser le démantèlement des équipements internes d'un réacteur nucléaire refroidi à l'eau permettant une mise à dimension de composants ou d'éléments des équipements internes, par une méthode d'une mise en oeuvre simple, avec une production minimale de déchets radio-actifs difficilement récupérables.

Le but de l'invention est donc de proposer un procédé de démantèlement des équipements internes d'un réacteur nucléaire refroidi par de l'eau consistant à réaliser sous eau, à l'intérieur de la cuve du réacteur, le démontage et/ou le découpage de chacun des composants des équipements internes fixés dans la cuve, de manière à obtenir des éléments métalliques séparés de la cuve, procédé qui soit d'une mise en oeuvre simple, qui puisse être effectué dans de très bonnes conditions de sûreté et qui produise une quantité minimale de déchets radioactifs de petites dimensions tels que des copeaux, des poudres ou des limailles.

Dans ce but, on extrait successivement de la cuve chacun des éléments obtenus et pour chacun des éléments, on réalise sous eau le compactage de l'élément extrait de la cuve et on place l'élément compacté dans un conteneur de stockage.

Afin de bien faire comprendre l'invention, on va maintenant décrire, à titre d'exemple non limitatif, un exemple de mise en oeuvre du procédé suivant l'invention ainsi qu'un dispositif utilisé pour cette mise en oeuvre.

La figure 1 est une vue en coupe par un plan vertical d'une partie de la structure d'un réacteur nucléaire refroidi à l'eau dans lequel on effectue le démantèlement des équipements internes de la cuve, par le procédé suivant l'invention.

La figure 2 est une vue en coupe et en élévation verticale d'un dispositif de découpage et de manutention utilisé pour la mise en oeuvre du procédé suivant l'invention.

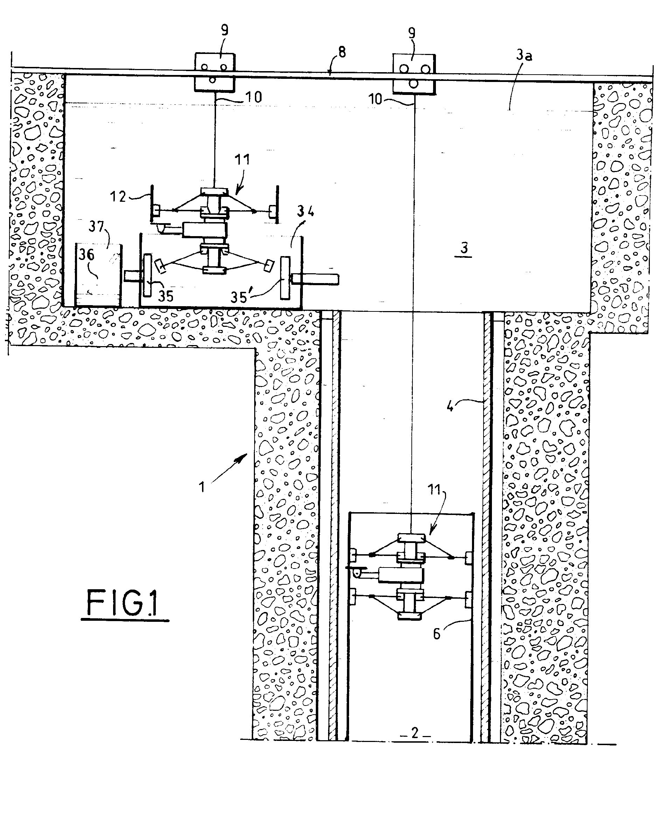

Sur la figure 1, on voit la structure en béton 1 d'un réacteur nucléaire dans laquelle est ménagé un puits de cuve 2 débouchant, à sa partie supérieure, dans une piscine 3 constituant la piscine du réacteur nucléaire. La cuve du réacteur 4 qui comporte un corps de forme générale cylindrique est disposée à l'intérieur du puits de cuve avec son axe vertical.

Sur la figure 1, on a représenté la cuve 4 et la structure 1 du réacteur pendant une phase du démantèlement des équipements internes de la cuve, après l'arrêt définitif du réacteur.

Après l'arrêt définitif et le refroidissement du réacteur, le couvercle de la cuve est démonté et les assemblages du coeur sont extraits, introduits dans des conteneurs de transport et évacués vers une usine de retraitement.

Le couvercle de cuve peut être découpé, de manière à constituer des fragments qui sont placés dans des conteneurs de stockage permettant leur évacuation vers un site de stockage de longue durée.

Il est alors nécessaire d'effectuer le démontage et l'élimination des équipements internes de la cuve qui comportent en particulier une enveloppe de coeur 6 (représentée sur la figure 1) fixée dans une disposition coaxiale par rapport à la cuve 4, à l'intérieur de cette cuve.

Sur la figure 1, on a représenté des moyens permettant la mise en oeuvre du procédé de démantèlement suivant l'invention, dans le cas du démantèlement de l'enveloppe de coeur 6 du réacteur nucléaire qui est constituée par une virole cylindrique de forte épaisseur fixée dans une disposition coaxiale à l'intérieur de la cuve 4.

Le démantèlement des équipements internes et en particulier de l'enveloppe de coeur 6 est réalisé sous eau, le puits de cuve 2, la cuve 4 et la piscine 3 du réacteur étant remplis d'eau.

Le niveau 3a de l'eau dans la piscine 3 correspond au niveau maximal de remplissage de la piscine.

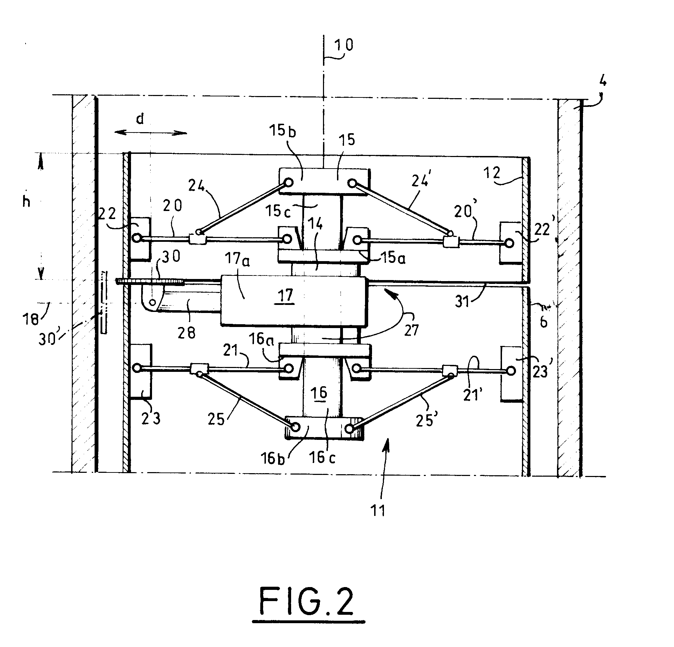

Sur les bords supérieurs de la piscine, sont fixés des rails 8 de circulation d'un pont roulant 9 comportant un treuil de levage dont le câble de suspension 10 porte un ensemble 11 de découpage et de manutention d'éléments des équipements internes supérieurs qui sera décrit en se référant à la figure 2.

L'ensemble 11 suspendu à l'extrémité du câble 10 est introduit à l'intérieur de l'enveloppe de coeur 6 de manière à réaliser le découpage d'éléments de cette enveloppe ayant la forme de tronçons cylindriques 12 qui peuvent être transportés sous eau après leur découpage, dans une presse de compactage 34 disposée sur le fond de la piscine 3, dans une position adjacente par rapport au puits de cuve 2.

Comme il sera expliqué plus loin, le tronçon 12 de l'enveloppe de coeur 6, de forme annulaire, reste fixé, après son découpage, à la partie supérieure du dispositif 11 qui est suspendue au câble 10.

Le treuil de levage du dispositif de manutention 9 permet d'assurer le levage du tronçon 12 jusqu'à un niveau supérieur au niveau supérieur du puits 2, à l'intérieur de la piscine 3.

Par déplacement horizontal du chariot 9 du pont roulant, on vient alors placer le tronçon 12 au-dessus de la presse 34. Le tronçon 12 est introduit dans la presse 34, par son extrémité supérieure ouverte à l'intérieur de la piscine 3, pour réaliser son compactage entre les mors 35 et 35' de la presse à disposition horizontale.

Le compactage de l'élément 12 prélevé sur l'enveloppe de coeur 6 est effectué en plusieurs étapes successives, après retrait de l'outil 11, de manière à obtenir un bloc compacté 36 qui peut être introduit dans un conteneur de stockage 37 disposé dans le fond de la piscine, par un outil de manutention à pince commandé depuis le bord supérieur de la piscine 3.

Après qu'on ait réalisé le remplissage du conteneur 37 par des blocs compactés 36, on évacue le conteneur 37 vers un site de stockage de longue durée ou une unité de traitement de déchets radio-actifs.

Pour réliser le démantèlement des équipements internes d'une cuve de réacteur nucléaire telle que la cuve 4 représentée sur la figure 1, les différents composants constituant les équipements internes fixés à l'intérieur de la cuve 4 sont démontés et transportés de manière à être déposés dans la presse de compactage 34, soit en une seule pièce, dans le cas des composants les moins volumineux, soit après un découpage permettant d'obtenir des tronçons successifs du composant, dans le cas des composants les plus volumineux, tels que l'enveloppe de coeur 6.

Dans le cas d'un réacteur nucléaire refroidi à l'eau comportant comme composants principaux de ses équipements internes, une grille supérieure de coeur, une grille inférieure de coeur et une enveloppe de coeur, on réalise dans un premier temps le démontage et l'extraction de la grille supérieure de coeur qui est transportée par un outillage de levage et de manutention suspendu au pont fixé au-dessus de la piscine, de manière à être déposée dans le bâti de la presse reposant sur le fond de la piscine.

On effectue ensuite le compactage sous eau de la grille supérieure de coeur dans son ensemble et la pièce compactée obtenue est placée dans un conteneur qui est ensuite fermé de manière étanche. Le conteneur est évacué à l'extérieur du bloc réacteur. On effectue ensuite un nettoyage de la piscine du réacteur, de manière à éliminer les substances radio-actives qui ont pu se déposer ou venir en suspension dans l'eau de la piscine pendant le démontage et le compactage de la grille supérieure de coeur.

On effectue ensuite le démontage, l'extraction et le compactage de la grille inférieure de coeur d'une manière pratiquement similaire aux opérations correspondantes effectuées sur la grille supérieure de coeur.

On utilise pour réaliser le démontage et l'extraction de la grille inférieure de coeur, un palonnier télécommandé qui est fixé au câble du treuil de levage du pont roulant se déplaçant au-dessus de la piscine.

A l'issue du compactage de la grille inférieure de coeur, on effectue un nettoyage de la piscine par filtration de l'eau de cette piscine et élimination des déchets radio-actifs, avant de réaliser le découpage et l'élimination par éléments de l'enveloppe de coeur.

Un bac de récupération de copeaux métalliques est mis en place au fond de la cuve 4, de manière à récupérer les déchets d'usinage provenant de la coupe de l'enveloppe de coeur 6. On réalise également un bridage et une fixation de la partie inférieure de l'enveloppe de coeur 6 à l'intérieur de la cuve 4.

On fixe, à l'extrémité du câble de levage 10 du pont roulant 9 se déplaçant au-dessus de la piscine 3 du réacteur, un ensemble de coupe et de manutention 11 permettant de réaliser le tronçonnage de l'enveloppe de coeur 6 sous la forme de tronçons annulaires 12 et le transfert des éléments annulaires 12 dans la presse de compactage 34, comme il a été décrit plus haut.

On va maintenant se reporter à la figure 2 pour décrire l'ensemble de coupe et de manutention 11.

Sur la figure 2, l'ensemble de coupe et de manutention 11 a été représenté dans une position de travail à l'intérieur de l'enveloppe de coeur 6 fixée en position coaxiale dans la cuve 4 du réacteur nucléaire.

L'ensemble de coupe et de manutention 11 comporte un arbre 14 fixé en position verticale à l'extrémité du câble de levage 10 sur lequel sont montés un ensemble de préhension et de bridage 15 à sa partie supérieure, un ensemble de maintien 16, à sa partie inférieure de l'arbre 14 et un outil de coupe 17 dans une position intermédiaire entre l'ensemble supérieur 15 et l'ensemble inférieur 16.

Les ensembles 15 et 16 sont constitués de manière sensiblement identique et disposés de manière sensiblement symétrique par rapport à un plan horizontal passant par l'axe 18 de l'outil de coupe 17.

Les ensembles 15 et 16 comportent une base 15a (ou 16a) et un fût 15c (ou 16c) fixés sur l'arbre 14 et une tête d'actionnement 15b (ou 16b) solidaire d'une tige de vérin montée mobile dans le fût correspondant 15c (ou 16c).

Au moins deux tiges de bridage 20 et 20′ (ou 21 et 21′) sont montées articulées sur la base 15a (ou 16a) de l'ensemble correspondant 15 (ou 16), dans des directions sensiblement perpendiculaires à l'axe de l'arbre vertical 14.

A l'extrémité extérieure des tiges 20, 20′, 21, 21′ opposée à leur extrémité articulée autour d'un axe horizontal sur la base correspondante 15a ou 16a est monté un patin 22, 22′, 23, 23′ articulé autour d'un axe horizontal.

Des tiges d'actionnement 24, 24′ ou 25, 25′ sont montées articulées sur les têtes d'actionnement 15b et 16b et engagées à leur autre extrémité, par l'intermédiaire d'un palier de glissement sur la tige de bridage correspondante 20, 20′, 21, 21′.

Par actionnement dans un sens du vérin des ensembles 15 ou 16, on peut réaliser le bridage de cet ensemble à l'intérieur de l'enveloppe de coeur 6, par mise en apppui des patins 22 et 22′ ou 23 et 23′ contre la surface intérieure de l'enveloppe de coeur 6, par l'intermédiaire des tiges d'actionnement et des tiges de bridage.

Par actionnement des vérins dans le sens inverse, on réalise le desserrage des patins des ensembles de bridage qui se trouvent alors légèrement écartés de la surface intérieure de l'enveloppe 6.

L'outil de coupe 17 comporte un corps d'outil 17a qui est monté rotatif autour de l'axe de l'arbre 14, comme indiqué par la flèche 27, grâce à des paliers intercalés entre les bases 15a et 16a des ensembles 15 et 16 et un dispositif moteur d'entraînement en rotation.

L'outil de coupe 17 comporte un arbre 28 monté coulissant dans la direction de l'axe 18 de l'outil et associé à un dispositif de déplacement en translation, dans un sens et dans l'autre, sur une distance radiale d.

Pour réaliser la coupe de l'enveloppe de coeur 6 d'un réacteur nucléaire refroidi à l'eau, l'amplitude de déplacement d est généralement voisine de 100 mm.

L'extrémité extérieure du bras 28 porte une lame de scie circulaire solidaire d'un arbre entraîné en rotation par un motoréducteur.

La lame de scie circulaire 30 et son arbre d'entraînement en rotation sont fixés sur une chape montée articulée autour d'un axe horizontal à l'extrémité du bras 28. La chape de support de la lame de scie 30 comporte des moyens de blocage permettant de placer la lame 30, soit dans une position horizontale comme représentée en traits pleins sur la figure 2, soit dans une position verticale 30′ représentée en pointillés.

Le découpage de tronçons 12 de l'enveloppe 6 est réalisé avec la lame 30 dans une position horizontale.

Dans sa position verticale 30′, la lame 30 permet le découpage de structures de liaison de l'enveloppe de coeur 6 et d'éléments annexes tels que des tores d'alimentation du coeur en eau de refroidissement.

Après avoir effectué le démontage et le compactage de la grille supérieure de coeur et de la grille inférieure de coeur, comme décrit plus haut, on vient placer l'ensemble de coupe et de manutention 11 à l'intérieur de l'enveloppe 6, grâce au moyen de levage 9. Les patins de serrage 22, 22′, 23 et 23′ des ensembles 15 et 16 sont dans une position rétractée, de manière à permettre l'introduction de l'ensemble 11 à l'intérieur de l'enveloppe de coeur 6.

On réalise ensuite le bridage de l'ensemble 11 à l'intérieur de l'enveloppe 6 par l'intermédiaire des patins, en actionnant les vérins des ensembles de bridage 15 et 16.

La lame de scie circulaire 30 placée dans sa position horizontales est disposée à une hauteur h endessous du bord supérieur de la virole de coeur 6, la hauteur h qui peut être par exemple de l'ordre d'un mètre correspondant à la hauteur d'un tronçon 12 dont on effectue le découpage.

Le corps 17a de l'outil de coupe 17 et la lame de scie circulaire 30 sont mis en rotation autour de l'axe vertical de l'arbre 14.

Le bras 28 est déplacé vers l'extérieur, de manière à réaliser l'avance de la lame de scie circulaire 30 en direction de la surface intérieure de l'enveloppe de coeur 6 et suivant l'épaisseur de cette enveloppe de coeur. On réalise ainsi une coupe 31 de la virole de coeur 6, dans un plan horizontal ayant une position parfaitement définie.

Après avoir effectué la coupe 31 permettant de détacher un tronçon 12 de l'enveloppe de coeur 6, on actionne le vérin de l'ensemble de bridage inférieur 16, de manière à obtenir le desserrage des patins 23 et 23′.

Le tronçon 12 qui reste fixé sur l'ensemble 11 par l'intermédiaire du dispositif de bridage supérieur 15 peut être transporté et déposé dans la presse de compactage 34, comme il a été décrit plus haut. On réalise le desserrage de l'ensemble de bridage 15 de manière à séparer l'ensemble 11 du tronçon 12.

L'ensemble 11 est remis en place à l'intérieur de l'enveloppe de coeur 6, de manière à réaliser le découpage d'un nouveau tronçon 12 dont la hauteur, réglée par la position de l'ensemble 11, est déterminée par la structure des équipements internes du réacteur.

Entre deux opérations de découpage d'un tronçon 12, il est possible de placer la lame de scie circulaire dans sa position verticale 30′ pour réaliser le découpage d'organes auxiliaires des équipements internes tels que des tores d'alimentation du coeur du réacteur en eau de refroidissement. Les fragments des équipements internes produits pendant ces découpages dans la direction verticale sont repris par un dispositif de manutention permettant leur transport à l'intérieur de la presse de compactage ou, dans le cas de fragments de petites dimensions, directement dans un conteneur de transport et de stockage 37.

On effectue ainsi le découpage de l'ensemble des équipements internes du réacteur puis le compactage des fragments obtenus de manière qu'une dimension au moins des fragments compactés soit inférieure à 400 mm et enfin l'évacuation des fragments compactés à l'intérieur d'un conteneur de stockage et de transport.

A l'issue des opérations de découpage et d'élimination des équipements internes du réacteur, la piscine 3 et le puits de cuve 2 sont décontaminés avant qu'on effectue le découpage et l'élimination du métal constituant la cuve 4, par exemple en utilisant le procédé décrit dans la demande de brevet 90-08117 déposée par la Société FRAMATOME le 27 juin 1990.

Le procédé suivant l'invention permet de démanteler les équipements internes d'un réacteur nucléaire dans leur ensemble, avec une production réduite de déchets radio-actifs de petites dimensions dont l'élimination dans l'eau de la piscine s'avèrerait délicate.

L'invention ne se limite pas au mode de réalisation qui a été décrit.

C'est ainsi que l'ensemble de coupe et de manutention peut avoir une structure différente de celle qui a été décrite.

De même, la presse de compactage peut avoir toute forme et toute dimension adaptées à la forme et à la dimension des fragments des équipements internes prélevés à l'intérieur de la cuve.

Enfin, le procédé et le dispositif suivant l'invention s'appliquent au démantèlement des équipements internes de tout réacteur nucléaire refroidi à l'eau.

## Revendications

**1.-** Procédé de démantèlement des équipements internes d'un réacteur nucléaire refroidi par de l'eau consistant à réaliser sous eau, à l'intérieur de la cuve (4) du réacteur, le démontage et/ou le découpage de chacun des composants (6) des équipements internes fixés dans la cuve (4), de manière à obtenir des éléments métalliques (12) séparés de la cuve (4), caractérisé par le fait qu'on extrait successivement de la cuve (4) chacun des éléments (12) obtenus et que pour chacun des éléments (12), on réalise le compactage sous eau de l'élément (12) extrait de la cuve (4) et on place l'élément compacté (36) dans un conteneur de stockage (37).

2.- Procédé suivant la revendication 1, dans le cas où les équipements internes comportent une enveloppe de coeur (6) cylindrique disposée en position coaxiale à l'intérieur de la cuve (4) de forme cylindrique ayant son axe vertical, caractérisé par le fait qu'on réalise des coupes successives (31) de l'enveloppe de coeur (6) dans des plans horizontaux, de manière à constituer des éléments de l'enveloppe de coeur (6), sous la forme de tronçons cylindriques (12).

3.- Procédé suivant l'une quelconque des revendications 1 et 2, caractérisé par le fait qu'on réalise le compactage des éléments (12) extraits de la cuve (4), au voisinage de la partie inférieure d'une piscine (3) dans laquelle débouche un puits de cuve (2) dans lequel est placée la cuve (4).

4.- Procédé suivant l'une quelconque des revendications 1 à 3, caractérisé par le fait que les éléments compactés (36) ont au moins une dimension inférieure à 400 mm.

5.- Dispositif de démantèlement des équipements internes d'un réacteur nucléaire refroidi par de l'eau, caractérisé par le fait qu'il comporte un ensemble (11) de découpage et de manutention d'éléments (12) des équipements internes (6), une presse de compactage (34) disposée dans une piscine (3) au-dessus du niveau de la cuve (4) du réacteur, au moins un moyen de stockage (37) de déchets radio-actifs disposé sur le fond de la piscine (3) et un dispositif de levage et de manutention (9) comportant un moyen de levage (10) auquel est fixé l'ensemble de coupe et de manutention (11), de manière à réaliser la coupe d'éléments (12) des équipements internes (6) à l'intérieur de la cuve et le transport des éléments (12) obtenus dans la presse de compactage (34).

6. - Dispositif suivant la revendication 5, caractérisé par le fait que l'ensemble de coupe et de manutention (11) comporte un arbre (14) fixé à l'élément de levage (10) dans une position verticale, un premier ensemble de bridage (15) monté sur l'arbre (14) à sa partie supérieure, un second ensemble de bridage (16) monté sur l'arbre (14) à sa partie inférieure et un outil de coupe (17) monté rotatif sur l'arbre (14) autour de son axe, disposé entre les ensembles de bridage supérieur (15) et inférieur (16).

7.- Dispositif suivant la revendication 6, caractérisé par le fait que chacun des ensembles de bridage (15, 16) comporte une base (15a, 16a) fixée sur l'arbre (14), au moins deux tiges de bridage (20, 20', 21, 21') montées articulées sur les bases (15a, 16a) de chacun des ensembles (15, 16), une tête d'actionnement (15b, 16b) reliée à une partie mobile d'un vérin solidaire de la base (15a, 16a) de l'ensemble (15, 16) correspondant et au moins deux tiges d'actionnement (24, 24', 25, 25') reliées de manière articulée aux têtes d'actionnement (15b, 16b) de chacun des ensembles (15, 16) et engagées sur les tiges de bridage (20, 20', 21, 21') de manière glissante, pour déplacer les tiges de bridage (20, 20', 21, 21') portant des patins d'appui (22, 22', 23, 23') à leur extrémité opposée à la base (15a, 16a) sur laquelle elles sont articulées, entre une position de serrage des patins contre la surface des équipements internes (6) et une position desserrée, par l'intermédiaire des têtes d'actionnement (15b, 16b) reliées aux parties mobiles des vérins.

8.- Dispositif suivant l'une quelconque des revendications 5, 6 et 7, caractérisé par le fait que l'outil de coupe (17) comporte un corps d'outil (17a) monté rotatif sur l'arbre (14) autour de son axe et un bras (28) monté coulissant dans le corps (17a), dans une direction perpendiculaire à l'axe de rotation du corps (17a) sur l'arbre (14).

9.- Dispositif suivant la revendication 8, caractérisé par le fait qu'une lame de scie circulaire (30) est montée à l'extrémité du bras (28), de manière à pouvoir être placée dans une position horizontale perpendiculaire à l'axe de l'arbre (14) ou dans une position verticale parallèle à cet axe.

**FIG.1**

# FIG.2

Office européen
des brevets

**RAPPORT DE RECHERCHE EUROPEENNE**

Numero de la demande

EP 92 40 0196

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 600 202 (TRANSNUCLEAIRE)<br>* revendications 1,2,4; figure 1 *<br>--- | 1-9 | G21F9/30<br>G21C19/36 |
| Y | Derwent file supplier WPIL<br>Derwent Publications , London, UK<br>& JP-A-60157095 (HITACHI)<br>* abrégé *<br>--- | 1-9 | |
| A | GB-A-2 092 049 (MINISTRY OF INTERNATIONAL TRADE)<br>* revendications 1,5; figure 2 *<br>--- | 1-9 | |
| A | FR-A-2 523 755 (WESTINGHOUSE)<br>* revendications 1,3,5; figures 1,5 *<br>--- | 1-9 | |
| A | FR-A-2 506 993 (WESTINGHOUSE)<br>* le document en entier *<br>----- | 1-9 | |
| | | | **DOMAINES TECHNIQUES RECHERCHES (Int. Cl.5)**<br><br>G21F<br>G21C |

Le présent rapport a été établi pour toutes les revendications

| Lieu de la recherche | Date d'achèvement de la recherche | Examinateur |
|---|---|---|
| LA HAYE | 27 FEVRIER 1992 | NICOLAS H.J.F. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.........................................................................
& : membre de la même famille, document correspondant

EPO FORM 1503 03.82 (P0402)